# EUROPÄISCHE PATENTSCHRIFT

(11) **EP 1 328 340 B1**
(45) Veröffentlichungstag und Bekanntmachung des Hinweises auf die Patenterteilung: **29.12.2004**
(21) Anmeldenummer: 01986620.1
(22) Anmeldetag: 02.10.2001
(51) Int. Cl.: B01J 13/18, B01J 13/20

(54) **MIT EINEM AMINOPLAST MIKROVERKAPSELTE FESTSTOFFE UND VERFAHREN ZU DEREN HERSTELLUNG**
SOLID MATTER MICRO-ENCAPSULATED BY AN AMINOPLAST AND METHOD FOR PRODUCING THE SAME
MATIERES SOLIDES MICRO-ENCAPSULEES PAR UN AMINOPLASTE ET LEUR PROCEDE DE FABRICATION

(30) Priorität: 09.10.2000 DE 10049777
(43) Veröffentlichungstag der Anmeldung: 23.07.2003
(73) Patentinhaber: Fraunhofer-Gesellschaft zur Förderung der angewandten Forschung e.V., 80686 München (DE)
(72) Erfinder: NASTKE, Rudolf, 14558 Bergholz-Rehbrücke (DE); RAFLER, Gerald, 14473 Potsdam (DE)
(86) Internationale Anmeldenummer: PCT/EP2001/011376
(87) Internationale Veröffentlichungsnummer: WO 2002/030556

(56) Entgegenhaltungen:
- GB-A- 1 389 238
- US-A- 3 778 383
- US-A- 4 089 800

## Beschreibung

Die Erfindung betrifft mit einem Aminoplast mikroverkapselte Feststoffpartikel und ein quasi-kontinuierliches Verfahren zu deren Herstellung unter besonderer Berücksichtigung umweltrelevanter Aspekte durch gesteuerte Kreislauffahrweise der eingesetzten Medien.

Mikroverkapselte Feststoffpartikel finden ihre Verwendung in der Land- und Forstwirtschaft, in Hygieneprodukten, im Human- und Veterinärbereich, der Kosmetikindustrie, in Produkten der Nahrungs-, Verpakkungs-, Bau- sowie Lacke- und Farbenindustrie, im Umweltschutzbereich und vielen anderen industrietechnischen Erzeugnissen. Ihr Einsatz erfolgt als Dispersionen, freifließende Pulver oder direkte Einarbeitung in andere Stoffe, insbesondere auf dem Polymersektor durch Spritzguss, Sintern, Extrudieren oder andere geläufige formgebende Verfahren.

Die Mikroverkapselung mittels Aminoharzen ist in der Literatur in vielfältiger Weise beschrieben. So lehrt z.B. die EP 0 017 386 den Einsatz von mit Aminoharzen mikroverkapselten Substanzen im Bereich der Herstellung von Durchschreibepapieren. Einen Schwerpunkt der Erfindungen bildet in der Regel eine spezifische Modifizierung des eingesetzten wandbildenden Aminoharzes, die vorrangig kernmaterialbezogen vorgenommen wurde, wie sie die US 4,525,520 lehrt. Auch die Kombination mit gegenüber dem Aminoharz inerten Zuschlagstoffen ist aus der EP 0 532 462 bekannt.

In der Regel werden vorrangig flüssige Komponenten mikroverkapselt und dies trifft ganz besonders auf die Verwendung der Aminoharze als wandbildende Materialien zu. Für Feststoffe benutzt man meist Coatingverfahren, die vorrangig auf physikalischen Prinzipien beruhen wie z.B. die Wurster-Technik und andere Sprühcoatingverfahren, Dragier- oder Granulierverfahren (vgl. B. H. Kaye "Microencapsulation" KONA 10 (1992) 65) oder es werden aufwendige Verfahren unter Verwendung überkritischer Lösemittel angewandt (Ind. Eng. Chem. Res. 26(1987) 2298).

Die direkte Mikroverkapselung von Feststoffen wird in der EP 0 940 171 beschrieben, die aufwendige Polymer/Monomer-Kompositionen verwenden.

Problem bei einer Mikroverkapselung fester Stoffe bildet deren hydrodynamisches Verhalten, insbesondere wenn es sich um unregelmäßige Formen oder gar nadlige, kristalline Produkte handelt. An den exponierten Stellen dieser Stoffe (Nadelspitzen, scharfe Kanten an Kristallen, Hohlräume bzw. Poren o.ä.) bilden sich hohe Strömungsgeschwindigkeiten und Strömungswirbel aus, die eine qualitativ vertretbare Beschichtung des Stoffes in diesem Bereich verhindern. Durch die hohen Strömungsgeschwindigkeiten werden die sich anlagernden Präpolymerkolloide schnell wieder abgetragen. Eine Minderung der Strömungsgeschwindigkeit ist jedoch in der Regel nicht möglich, da verstärkt Agglomeration, Aggregation und Koaleszenz eintritt. Kontinuierliche Mikroverkapselungsverfahren sind auch aus der US 4,454,083 und der US 4,105,823 bekannt, in der auch Aminoharze als Co-Komponente verwendet werden. In der US 4,898,696 wird ein Verfahren beschrieben, das mit wasserlöslichen Hochpolymeren mit starken Säuregruppen arbeitet, die als Härterkomponente für Melamin-Formaldehyd-Präkondensate dienen. Nachteilig hierbei ist, dass das eingesetzte hochpolymere Produkt entweder mit in die Kapselwand eingebaut wird oder während des Generationsprozesses zur Ausfällung bzw. Flockung neigt und dann schwer vom Kapselprodukt trennbar ist. Oft beobachtet man dann auch Verklebungen der Einzelpartikel, Agglomerationen und Aggregatebildung.

Der Erfindung liegt daher die Aufgabe zugrunde, mikroverkapselte Feststoffpartikel und ein quasikontinuierliches Verfahren zu deren Herstellung zu entwickeln, womit diese beschriebenen Mängel beseitigt werden.

Diese Aufgabe wird durch die gattungsgemäßen Feststoffpartikel mit den Merkmalen des Anspruchs 1 und dem gattungsgemäßen Verfahren zu deren Herstellung mit den Merkmalen des Anspruchs 4 gelöst. Erfindungsgemäße Verwendungen des Verfahrens sind durch die Merkmale der Ansprüche 21 und 22 gekennzeichnet. Die jeweiligen Unteransprüche enthalten vorteilhafte Weiterbildungen.

Erfindungsgemäß besteht der mit Aminoplast mikroverkapselte Feststoffpartikel aus einem Partikel, dessen Oberfläche mit einem Aminoplasten verkapselt ist. Der Aminoplast besteht dabei aus dem Kondensationprodukt von partiell veretherten Aminoharzvorkondensaten. Mindestens einer dieser Aminoharzvorkondensate ist dabei durch Co-Kondensation mit einem ethoxyliertem Fettamin mit einer KOH-Zahl zwischen 80 und 140 modifiziert worden, wodurch eine erhöhte Grenzflächenaktivität dieser Komponente erreicht wird.. Aufgrund der hohen Grenzflächenaktivität ist so auch die Verkapselung des Feststoffpartikels an exponierten Positionen mit hoher Homogenität und Gleichmäßigkeit möglich.

Bevorzugt beträgt die Stärke der Verkapselung, d.h. die Schichtdicke des Aminoplasts mehr als 50 nm und weniger als 300 nm.

Eine bevorzugte Ausführungsform der Erfindung schlägt vor, daß der Kern hydrophobiert worden ist. Es ist weiterhin auch möglich, daß im Aminoplast selbst ein Hydrophierungsmittel enthalten ist. Bevorzugt ist jedoch die Ausführungsform, bei der vor dem Verkapseln eine Hydrophobierung durchgeführt worden ist.

Der Vorteil dieser Ausführungsform ist darin zu sehen, daß eine Reihe von Feststoffen hydrolyseempfindlich sind. Durch den Hydrophobierungsschritt kann hier nun Abhilfe geschaffen werden. Bevorzugt ist es dabei, wenn die Feststoffe vorzugsweise mit Polydimethylsiloxanen und besonders bevorzugt mit solchen die Hydroxyendgruppen besitzen in Form des handelsüblichen Produktes oder in verdünnter Form in einem geeigneten organischen Lösungsmittel gelöst, das auch mit dem Feststoff kompatibel ist, behandelt wird. Ein weiteres geeignetes Hydrophobierungsmittel stellen Wachse und besonders bevorzugt Paraffinwachse mit unterschiedlichen Schmelzpunkten zwischen Raumtemperatur und 130° (in Abhängigkeit von zum hydrophobierenden Feststoff), dar, wobei bevorzugt die Schmelze des Wachses zur Hydrophobierung angewandt wird. Auch hier ist jedoch der Einsatz gelöster Wachse anstelle der Schmelze in vielen Fällen möglich. Besonders für Stoffe mit einem hohen Anteil an Meso- und Makroporen eignen sich bevorzugt auch flüssige Paraffine und Paraffinöle. Der Anteil an auf dem Feststoff aufgebrachten Hydrophobierungsmittel, kann bezogen auf den Feststoff 0,05 bis 50 Gew.-%, bevorzugt 0,1 bis 20 Gew.-% und besonders bevorzugt 0,5 bis 5 Gew.-% betragen.

Das Verfahren zur Herstellung der mikroverkapselten Feststoffpartikel gliedert sich in folgende Verfahrensschritte:
a) Mikroverkapselungsprozess,
b) Reifeprozess (Nachhärtung),
c) Trennverfahren inkl. Trocknung des mikroverkapselten Materials,
d) Aufbereitung und Regenerierung des kontinuierlichen Mediums (Mutterlauge).

Dazu werden in einem geeigneten Reaktionsgefäß, ausgestattet mit geeigneter Rühr- und Meßtechnik sowie Heizung, Wasser und die Reaktanden eingetragen, wobei anstelle des Wassers teilweise oder auch ausschließlich regenerierte Mutterlauge aus dem Prozeß eingetragen werden kann.

Für die Kondensation zum Aminoplasten werden in der Regel zwei Typen von Aminoharz-Präkondensaten A und B eingesetzt. So handelt es sich bei dem Präkondensat A um ein Melaminharzpräkondensat, das partiell methyliert wurde, mit einem vergleichsweise hohen Methylolgruppengehalt und einer niedrigen Iminofunktionalität. Ein weiteres charakteristisches Merkmal des Präkondensates ist seine beliebige Wasserverträglichkeit bzw. -verdünnbarkeit. Das Präkondensat B garantiert einen grenzflächenaktiven Charakter des Systems, der sich mit fortschreitendem Kondensationsgrad wesentlich verstärkt und dadurch die Beschichtung der hydrodynamisch benachteiligten Feststoffpartien gewährleistet. In Ableitung zur Synthesevorschrift B ist es auch möglich ein Präkondensat aus der DE 198 14 880 einzusetzen. Charakteristisch und für die Gestaltung der quasi kontinuierlichen Fahrweise unverzichtbar ist, daß das sich einstellende Gleichgewicht zwischen auf dem Feststoff niedergeschlagenem Polymer und in der Lösung verbleibendem Präpolymer im Reaktionssystem zu keiner nennenswerten weiteren Polykondensation befähigt ist. Erst durch Abtrennung des mikroverkapselten Feststoffes schreitet die Reaktion langsam fort. Dies wird durch die erneute Zugabe von Präkondensat (Aufstockung) wirkungsvoll verzögert. Das regenerierte Medium wird einer erneuten Mikrokapselsynthese zugeführt.

Im vorgeschlagenen System ist es notwendig puffernde Katalysatoren einzusetzen, die einen konstanten pH-Wert des Systems gewährleisten. Bedingt durch das eingesetzte Melamin im Präkondensat kann bereits bei einem pH von etwa 4,0 eine Protonierung des Melamins erfolgen, den Ausgleich vermittelt hier dann der puffernde Säurekatalysator.

In Abhängigkeit von der Reaktionstemperatur und dem pH-Wert des Mediums (vgl. Tabelle 1) beträgt die Verweilzeit im Reaktionsgefäß zwischen 5 und 30 Minuten.

Anschließend wird durch den Einsatz geeigneter Pumpen oder besser durch Schwerkraft die Mikrokapseldispersion in den Reifereaktor überführt. Unter moderatem Rühren wird der Reifereaktor befüllt, wobei der Zulauf günstigerweise am Behälterboden und der Ablauf zur Trennanlage im oberen Behälterbereich angebracht ist. Der Rührer im Reifereaktor sollte eine Förderung des Gutes in Richtung Behälterboden aufweisen. Eine Beheizung des Reifereaktors ist zwar günstig, jedoch nicht in jedem Fall zwingend erforderlich. Das Größenverhältnis von Reaktionsgefäß zu Reifereaktor sollte den Faktor 10 nicht unterschreiten, damit eine genügend hohe Verweilzeit des generierten Mikrokapselproduktes im Reifereaktor gewährleistet ist. Anstelle der Größe des Reifereaktors ist es selbstverständlich auch möglich eine Behälterkaskade, einen Schleifenreaktor oder auch ein Strömungsrohr zu benutzen, was den erforderlichen Inhalt nicht beeinträchtigt. Die mittlere Verweilzeit der mikroverkapselten Produkte im Reifereaktor sollte 30 Minuten nicht unterschreiten.

Nach Abschluß des Reifeprozesses erfolgt eine Abtrennung des Produktes von der Flüssigkeit (Mutterlauge) beispielsweise kontinuierlich über eine Schälzentrifuge oder quasi-kontinuierlich über eine Nutschenkaskade mit Austrag des Produktes.

Anschließend wird in üblicher Weise getrocknet, wobei sich die Trocknungstemperaturen in Abhängigkeit vom Kernmaterial im Bereich von Raumtemperatur bis 150 °C bewegen können. Im Falle der Applikation von Dispersionen kann auf Trenn- und Trockenprozesse partiell verzichtet und die Dispersion nach evtl. weiterer Formulierung direkt eingesetzt werden.

Bei Anwendung der Trennverfahren wird in der abgetrennten Mutterlauge nach Volumenaufstockung in üblicher geeigneter Weise der pH-Wert und die Leitfähigkeit bestimmt sowie der Säuregehalt titrimetrisch ermittelt. Beim Einsatz grenzflächenaktiver Zuschlagstoffe oder von Schutzkolloiden können auch diese mit geeigneten Methoden ermittelt werden.

In Laborversuchen wurde die Gleichgewichtskonzentration von Aminoharzkombinationen ermittelt (z.B. Stickstoffbestimmung, FTIR-Spektroskopie u.ä.). Diese kann vom Kernmaterial und auch von der angewandten Katalysatorart und -konzentration abhängig sein und sollte bei Änderung dieser Parameter vor der Anwendung im Laborversuch ermittelt werden.

Die regenerierte Mutterlauge wird dann in den dafür vorgesehenen Vorratsbehälter überführt und steht damit einer erneuten Nutzung im Mikroverkapselungsprozess zur Verfügung.

Besteht die Notwendigkeit einer Nachwäsche des Produktes, sollte diese in halbkontinuierlicher Fahrweise auf der Schälzentrifuge oder den Nutschen erfolgen, wobei ein erster Anteil von ca. 20 % der Gesamtmenge ebenfalls der Mutterlauge zugeführt werden kann. Damit ist eine minimierte Belastung des Abwassers bzw. der Umwelt gewährleistet. Bei Zusammenschaltung zweier Reaktionsbehälter mit wahlweiser Ansteuerung der einzelnen Behälter ist die Durchführung des quasi-kontinuierlichen Prozesses möglich.

Für die Polykondensation wird bevorzugt ein Melamin-Formaldehyd-Vorkondensat eingesetzt, wobei pro mol Melamin 5 mol Formaldehyd verwendet werden.

Zwischen 2 und 4 Methylolgruppen des Präkondensats A sind bevorzugt mit Methanol verethert, besonders bevorzugt 3 Methylolgruppen.

Vorzugsweise kann das Präkondensat A durch den Zusatz von Amidgruppen enthaltenen Substanzen ebenso wie durch Akanolamine stabilisiert werden.

Die Co-Kondensation des Präkondensates B wird bevorzugt unter Zusatz von 5 bis 50 %, besonders bevorzugt 15%, eines ethoxylierten Fettamins durchgeführt. Das eingesetzte Fettamin besitzt eine KOH-Zahl zwischen 80 und 140 und bevorzugt zwischen 110 und 120. Die Temperatur für diese Co-Kondensation liegt dabei bevorzugt zwischen 20 und 80 °C und besonders bevorzugt 60 °C, wobei die Reaktionsdauer nicht kürzer als 30 und nicht länger 120 min dauert, wobei die Reaktion vorzugsweise 60 min durchgeführt wird.

Vorteilhaft ist es, wenn das Masseverhältnis bezogen auf 100 % Festharzgehalt zwischen den Präkondensaten A und B zwischen 1:0,2 und 1:10 liegt, besonders vorteilhaft ist aber ein Masseverhältnis bezogen auf 100 % Festharzgehalt von 1:1.

Es können wahlweise organische Säuren wie Ameisensäure, Essigsäure, Ascorbinsäure, Zitronensäure und andere organische Säuren mit genügend hoher Wasserlöslichkeit eingesetzt werden. Gleichfalls ist auch ein Einsatz von Säurekombinationen möglich wie Zitronensäure/Phosphorsäure, Ascorbinsäure/Salzsäure, Ascorbinsäure/Ameisensäure u.ä. oder die Verwendung von Kombinationen organischer Säuren mit sauren Salzen wie Essigsäure/Acetate, Ascorbinsäure/Tartrate u.a.m. angezeigt.

Die nach dem erfindungsgemäßen Verfahren hergestellten beschichteten Feststoffpartikel betreffen insbesondere metallische Partikel wie Metallflakes, Metalloxide wie Aluminiumoxid, Titandioxid, Zinkoxid, Eisenoxide o.a.m. sowie kristalline wasserunlösliche oder wasserlösliche voher hydrophobierte Stoffe, Farbstoffe, Markerfarben oder auch magnetisierbare Partikel, die in den verschiedensten industriellen und kommerziellen Bereichen eingesetzt werden.

Anhand der nachfolgenden Beispiele soll der erfindungsgemäße Gegenstand beispielhaft erläutert werden.

### Beispiel A:

### Herstellung eines modifizierten, partiell veretherten Melaminharzes

In ein geeignetes Rührgefäß, mit Rührer, Heiz- und Kühlvorrichtung und Vakuumdestillationsvorrichtung ausgerüstet, gibt man z.B. 4450 ml 30 Gew.-%igen wäßrigen Formaldehyd, erwärmt auf 80 °C und stellt den pH-Wert mittels einer konzentrierten Natronlauge auf pH 9 ein. Anschließend werden 1000 g Melamin eingetragen. Durch den exothermen Reaktionsverlauf steigt die Temperatur auf etwa 90 °C an. Nach Klarwerden der Lösung (Auflösung des Melamins unter Methylolbildung) wird schnell auf 60 °C abgekühlt. Die sich bildende kristalline Ausfällung (Methylolmelamine) wird mit 4300 ml Methanol verdünnt und anschließend der pH-Wert mit Salzsäure auf Werte um 1 bis 2 heruntergeregelt. Die Reaktion wird bis zum Klarwerden der Lösung weitergerührt. Anschließend wird der pH-Wert mit Triethanolamin auf 8 bis 9 eingestellt. Bei einer Temperatur von 60 °C werden dann 2500 ml eines Methanol-Wasser-Gemisches unter vermindertem Druck abdestilliert. Die resultierende Harzlösung hat einen Feststoffgehalt von ca. 41 % und wird durch die Zugabe von 166 g Harnstoff stabilisiert. Das synthetisierte Harz ist bei Raumklima mindestens 6 Monate stabil.

### Beispiel B:

### Synthese eines modifizierten, partiell veretherten Melamin-Formaldehyd-Harzes mit grenzflächenaktiven Charakter

In einem mit Rührer und Rückflußkühler ausgerüstetem beheizbaren Rührgefäss werden z.B. 500 g eines handelsüblichen, hoch hydroxymethylierten, partiell mit Methanol veretherten Aminoharzvorkondensates auf Melaminbasis, z.B. Cymel 373 der Cytec Deutschland GmbH eingetragen. Anschließend gibt man 100 g eines ethoxylierten Fettamins, z.B. ethoxyliertes Talgfettamin mit einer Alkalizahl von etwa 115 mg KOH/g hinzu und stellt den pH-Wert mittels 2N wäßriger Zitronensäure auf 7,5 bis 8,5 ein und erwärmt unter Rückflußüber 60 min. auf 60 °C. Nach Abkühlung erhält man ein sirupöses honiggelbes Produkt, das über mindestens 3 Monate lagerfähig ist.

### Beispiel C:

### Synthese von mikroverkapselten Feststoffen

In einem mit entsprechender Rührtechnik ausgestattetem Reaktor werden beispielsweise 60 1 Wasser vorgelegt und auf 60 °C erwärmt. Aus geeigneten Vorratsbehältern werden nacheinander 7 Liter 2N wäßrige Zitronensäurelösung, 6 Liter der Melaminharzlösung aus Beispiel A und 3 Liter der Melaminharzlösung aus Beispiel B zudosiert. Der Zeitpunkt der Harzzugabe wird registriert. Die beiden Harzlösungen können auch vorab gemischt werden. Nach einer Vorkondensationszeit von 5 Minuten werden beispielsweise 10 kg eines Metalloxydpulvers (z. B. Titandioxid mit einer Korngrößenverteilung d₅₀ = 5 µm, d₉₀ = 10 µm, Schüttdichte 1.000g/dm³) unter Rühren schnell eingetragen. Im vorliegenden Fall wird mit einem Turbinenrührer bei 1000 UpM gerührt. Man läßt bei einer Temperatur von 60 °C 10 Minuten weiterrühren und überführt dann besonders günstig nach dem Schwerkraftprinzip in den Reifebehälter. Hier wird das Produkt bei einer Temperatur von 60 °C weiter gerührt. Die Produktentnahme aus dem Reifebehälter ist so bemessen, dass eine mittlere Verweilzeit der einzelnen Charge von 120 Minuten resultiert. Das entnommene Produkt wird kontinuierlich über eine Schälzentrifuge oder quasi-kontinuierlich über eine Nutschenbatterie entwässert. Die Mutterlauge wird in den dafür vorgesehenen Vorratsbehälter zurückgeführt und nach Regenerierung bei der Synthese erneut eingesetzt. Das ausgetragene feuchte Produkt wird in geeigneter Weise getrocknet und evtl. klassiert. Bei der angeführten Fahrweise erhält man Titandioxydpartikel mit einer durchschnittlich 180 nm dicken Aminoharzbeschichtung.

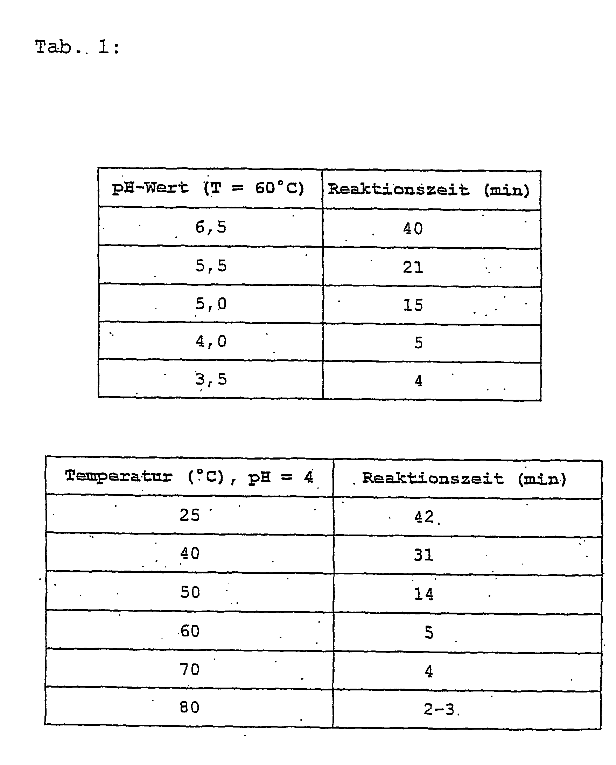

## Patentansprüche

1. Mit einem Aminoplast mikroverkapselte Feststoffpartikel,
**dadurch gekennzeichnet,**
**dass** der Aminoplast das Kondensationsprodukt aus partiell veretherten Aminoharzvorkondensaten ist, von denen mindestens eine Komponente durch eine Co-Kondensation mit einem ethaxyliertem Fettamin mit einer KOH-Zahl zwischen 80 und 140 eine hohe Grenzflächenaktivität aufweist.

2. Feststoffpartikel nach Anspruch 1,
**dadurch gekennzeichnet, dass** die Stärke der Mikroverkapselung auf dem gesamten Partikel mehr als 50 nm beträgt.

3. Feststoffpartikel nach einem der vorhergehenden Ansprüche,
**dadurch gekennzeichnet, dass** die Stärke der Mikroverkapselung auf dem gesamten Partikel weniger als 300 nm beträgt.

4. Feststoffpartikel nach einem der vorhergehenden Ansprüche, **dadurch gekennzeichnet,**
**daß** die Oberfläche des Partikels hydrophobiert ist und/oder im Aminoplast ein Hydrophobierungsmittel enthalten ist.

5. Verfahren zur Herstellung von mit Aminoplasten mikroverkapselten Feststoffpartikeln,
**dadurch gekennzeichnet,**
a) dass die Feststoffpartikel in ein Reaktionsgefäß eingetragen werden, in dem eine säurekatalysierte und in wäßriger Phase ablaufende Polykondensation von mindestens zwei Aminoharzvorkondensaten, von denen mindestens eine durch eine Co-Kondensation mit einem ethoxylierten Fettamin mit einer KOH-Zahl zwischen 80 und 140 modifiziert wurde, durchgeführt wird,
b) daß in einem größeren Sammelgefäß mit kontinuierlicher Entnahmemöglichkeit des Mediums eine Nachhärtung des Polymers erfolgt und
c) daß die mikroverkapselten Feststoffpartikel von der Mutterlauge getrennt und getrocknet werden und
d) die Mutterlauge wieder aufbereitet und dem Verfahren erneut zugeführt wird.

6. Verfahren nach Anspruch 5,
**dadurch gekennzeichnet, daß** von den Aminoharzvorkondensaten eine Komponente A partiell mit Methanol verethert ist und eine Komponente B durch Co-Kondensation mit einem ethoxylierten Fettamin grenzflächenaktiv modifiziert ist.

7. Verfahren nach mindestens einem der Ansprüche 5 oder 6,
**dadurch gekennzeichnet, dass** die Komponente A 5 mol Formaldehyd pro mol Melamin besitzt.

8. Verfahren nach mindestens einem der Ansprüche 5 bis 7,
**dadurch gekennzeichnet, dass** bei der Komponente A mindestens 2 und höchstens 4 Methylolgruppen mit Methanol verethert werden.

9. Verfahren nach mindestens einem der Ansprüche 5 bis 8,
**dadurch gekennzeichnet, dass** bei der Komponente A drei Methylolgruppen mit Methanol verethert werden.

10. Verfahren nach mindestens einem der Ansprüche 5 bis 9,
**dadurch gekennzeichnet, dass** die Komponente A mit einer Amidgruppen enthaltenden Substanz und einem Alkanolamin stabilisiert wurde.

11. Verfahren nach mindestens einem der Ansprüche 5 bis 10,
**dadurch gekennzeichnet, dass** die Komponente B durch Co-Kondensation mit 5 bis 50 % eines ethoxylierten Fettamins hergestellt wird.

12. Verfahren nach mindestens einem der Ansprüche 5 bis 11,
**dadurch gekennzeichnet, dass** die Komponente B durch Co-Kondensation mit 15 % eines ethoxylierten Fettamins hergestellt wird.

13. Verfahren nach mindestens einem der Ansprüche 5 bis 12,
**dadurch gekennzeichnet, dass** das ethoxylierte Fettamin eine KOH-Zahl zwischen 110 und 120 besitzt.

14. Verfahren nach mindestens einem der Ansprüche 5 bis 13,
**dadurch gekennzeichnet, dass** die Co-Kondensation der Komponente B bei Temperaturen zwischen 20 und 80 °C durchgeführt wird.

15. Verfahren nach mindestens einem der Ansprüche 5 bis 14,
**dadurch gekennzeichnet, dass** die Co-Kondensation der Komponente B bei einer Temperatur von 60 °C durchgeführt wird.

16. Verfahren nach mindestens einem der Ansprüche 5 bis 15,
**dadurch gekennzeichnet, dass** die Dauer der Co-Kondensation der Komponente B zwischen 30 und 120 min beträgt.

17. Verfahren nach mindestens einem der Ansprüche 5 bis 16,
**dadurch gekennzeichnet, dass** die Dauer der Co-Kondensation der Komponente B 60 min beträgt.

18. Verfahren nach mindestens einem der Ansprüche 5 bis 17,
**dadurch gekennzeichnet, daß** das Masseverhältnis bezogen auf den Festharzgehalt der Komponenten A zu B zwischen 1:0,2 -und 1:10 liegt.

19. Verfahren nach mindestens einem der Ansprüche 5 bis 18,
**dadurch gekennzeichnet, daß** das Masseverhältnis bezogen auf den Festharzgehalt der Komponenten A zu B 1:1 beträgt.

20. Verfahren nach mindestens einem der Ansprüche 5 bis 19,
**dadurch gekennzeichnet, daß** als katalysierende Säure organische Säuren, wie z.B. Zitronensäure, Ascorbinsäure, Essigsäure oder Mischungen hieraus, eingesetzt werden.

21. Verfahren nach mindestens einem der Ansprüche 5 bis 20,
**dadurch gekennzeichnet, daß** als katalysierende Säure Mischungen aus organischen Säuren und anorganische Säuren eingesetzt werden.

22. Verfahren nach mindestens einem der Ansprüche 5 bis 21,
**dadurch gekennzeichnet, daß** der Katalysator in einem pH-Bereich von 2 bis 7 aktiv ist.

23. Verfahren nach mindestens einem der Ansprüche 5 bis 22,
**dadurch gekennzeichnet, daß** der Katalysator in einem pH-Bereich von 3,5 bis 4 aktiv ist.

24. Verfahren nach mindestens einem der Ansprüche 5 bis 23, **dadurch gekennzeichnet, daß** auf den Feststoffpartikel 0,05 bis 50 Gew.-% Hydrophobierungsmittel bezogen auf das Gewicht des Kernmaterials aufgebracht werden und daß anschließend die Verkapselung durchgeführt wird.

25. Verwendung des Verfahrens nach den Ansprüchen 5 bis 24 zur Herstellung von mikroverkapselten Metall- oder Metalloxidpartikeln.

26. Verwendung des Verfahrens nach den Ansprüchen 5 bis 24 zur Mikroverkapselung von kristallinen Substanzen.

## Claims

1. Solid particles micro-encapsulated with an aminoplast,
**characterised in that** the aminoplast is the condensation product comprising partially etherified amino resin condensates, of which at least one component has a high interfacial activity as a result of a co-condensation with an ethoxylated fatty amine with a KOH number between 80 and 140.

2. Solid particles according to Claim 1, **characterised in that** the thickness of the micro-encapsulation on the entire particle amounts to more than 50 nm.

3. Solid particles according to one of the preceding claims, **characterised in that** the thickness of the micro-encapsulation on the entire particle amounts to less than 300 nm.

4. Solid particles according to one of the preceding claims, **characterised in that** the surface of the particle is hydrophobed and/or a hydrophobing agent is contained in the aminoplast.

5. Method of producing solid particles micro-encapsulated with aminoplasts, **characterised in that**
a) the solid particles are placed in a reaction vessel, in which is conducted an acid-catalysed polycondensation proceeding in the aqueous phase of at least two amino resin precondensates, of which at least one has been modified by a co-condensation with an ethoxylated fatty amine with a KOH number between 80 and 140,
b) that a subsequent curing of the polymer occurs in a larger collection vessel with continuous discharge ability of the medium, and
c) that the micro-encapsulated solid particles are separated from the mother liquor and dried, and
d) the mother liquor is prepared again and fed to the process once again.

6. Method according to Claim 5, **characterised in that** of the amino resin precondensates, a component A is partially etherified with methanol and a component B is modified interface-actively by co-condensation with an ethoxylated fatty amine.

7. Method according to at least one of Claims 5 or 6, **characterised in that** component A has 5 mol of formaldehyde per mol of melamine.

8. Method according to at least one of Claims 5 to 7, **characterised in that** in the case of component A at least 2 and at maximum 4 methylol groups are etherified with methanol.

9. Method according to at least one of Claims 5 to 8, **characterised in that** in the case of component A three methylol groups are etherified with methanol.

10. Method according to at least one of Claims 5 to 9, **characterised in that** component A has been stabilised with a substance containing amide groups and an alkanolamine.

11. Method according to at least one of Claims 5 to 10, **characterised in that** component B is produced by co-condensation with 5 to 50% of an ethoxylated fatty amine.

12. Method according to at least one of Claims 5 to 11, **characterised in that** component B is produced by co-condensation with 15% of an ethoxylated fatty amine.

13. Method according to at least one of Claims 5 to 12, **characterised in that** the ethoxylated fatty amine has a KOH number between 110 and 120.

14. Method according to at least one of Claims 5 to 13, **characterised in that** the co-condensation of component B is conducted at temperatures between 20 and 80°C.

15. Method according to at least one of Claims 5 to 14, **characterised in that** the co-condensation of component B is conducted at a temperature of 60°C.

16. Method according to at least one of Claims 5 to 15, **characterised in that** the duration of the co-condensation of component B amounts to between 30 and 120 minutes.

17. Method according to at least one of Claims 5 to 16, **characterised in that** that the duration of the co-condensation of component B amounts to 60 minutes.

18. Method according to at least one of Claims 5 to 17, **characterised in that** the mass ratio calculated on the basis of the solid resin content of components A to B amounts to between 1:0.2 and 1:10.

19. Method according to at least one of Claims 5 to 18, **characterised in that** the mass ratio calculated on the basis of the solid resin content of components A to B amounts to 1:1.

20. Method according to at least one of Claims 5 to 19, **characterised in that** organic acids, e.g. citric acid, ascorbic acid, acetic acid or mixtures thereof, are used as catalysing acid.

21. Method according to at least one of Claims 5 to 20, **characterised in that** mixtures of organic acids and inorganic acids are used as catalysing acid.

22. Method according to at least one of Claims 5 to 21, **characterised in that** the catalyst is active in a pH range from 2 to 7.

23. Method according to at least one of Claims 5 to 22, **characterised in that** the catalyst is active in a pH range from 3.5 to 4.

24. Method according to at least one of Claims 5 to 23, **characterised in that** 0.05 to 50% by wt. of hydrophobing agent, calculated on the basis of the weight of the core material, are applied to the solid particles, and that encapsulation is conducted subsequently.

25. Use of the method according to Claims 5 to 24 for the production of micro-encapsulated metal or metal oxide particles.

26. Use of the method according to Claims 5 to 24 for the micro-encapsulation of crystalline substances.

## Revendications

1. Particule de matière solide micro-encapsulée par un aminoplaste,
**caractérisée en ce que**
l'aminoplaste est le produit de condensation de précondensats de résine amino partiellement éthérifiés, dont au moins un composant présente, par co-condensation avec une amine grasse éthoxylée d'un indice KOH entre 80 et 140, une haute activité d'interface.

2. Particule de matière solide selon la revendication 1,
**caractérisée en ce que**
l'épaisseur des microcapsules sur la totalité de la particule est supérieure à 50 nm.

3. Particule de matière solide selon l'une des revendications précédentes,
**caractérisée en ce que**
l'épaisseur des microcapsules sur la totalité de la particule est inférieure à 300 nm.

4. Particule de matière solide selon l'une des revendications précédentes,
**caractérisée en ce que**
la surface de la particule est imperméabilisée et/ou l'aminoplaste contient un agent d'imperméabilisation.

5. Procédé de fabrication de particules de matière solide micro-encapsulées par des aminoplastes,
**caractérisé en ce que**
a) on introduit les particules de matière solide dans un récipient réactionnel dans lequel on effectue une polycondensation catalytique acide et en phase aqueuse d'au moins deux précondensats de résine amino, dont au moins un est modifié par co-condensation avec une amine grasse éthoxylée présentant un indice KOH entre 80 et 140 ;
b) il s'effectue, dans un récipient collectionneur plus grand avec possibilité de prélèvement en continu du milieu, un durcissement ultérieur du polymère ;
c) on sépare les particules micro-encapsulées des eaux-mères et on les sèche, et
d) les eaux-mères sont à nouveau traitées et à nouveau soumises au procédé.

6. Procédé selon la revendication 5,
**caractérisé en ce qu'**
à partir des précondensats de résine amino, on éthérifie partiellement, un composant A avec du méthanol, et on modifie un composant B de manière active sur l'interface par co-condensation avec une amine grasse éthoxylée, avec du méthanol.

7. Procédé selon au moins une des revendications 5 ou 6,
**caractérisé en ce que**
le composant A présente 5 moles de formaldéhyde par mole de mélamine.

8. Procédé selon au moins l'une des revendications 5 à 7,
**caractérisé en ce que**
dans le composant A, au moins 2 et tout au plus 4 groupes méthylol sont éthérifiés avec du méthanol.

9. Procédé selon au moins l'une des revendications 5 à 8,
**caractérisé en ce que**
dans le composant A, trois groupes méthylol sont éthérifiés avec du méthanol.

10. Procédé selon au moins l'une des revendications 5 à 9,
**caractérisé en ce que**
le composant A est stabilisé avec une substance contenant un groupe amide et une alcanolamine.

11. Procédé selon au moins l'une des revendications 5 à 10,
**caractérisé en ce que**
le composant B est fabriqué par co-condensation avec 5 à 50% d'une amine grasse éthoxylée.

12. Procédé selon au moins l'une des revendications 5 à 11,
**caractérisé en ce que**
le composant B est fabriqué par co-condensation avec 15% d'une amine grasse éthoxylée.

13. Procédé selon au moins l'une des revendications 5 à 12,
**caractérisé en ce que**
l'amine grasse éthoxylée présente un indice KOH entre 110 et 120.

14. Procédé selon au moins l'une des revendications 5 à 13,
**caractérisé en ce que**
la co-condensation du composant B s'effectue à des températures entre 20 et 80°C.

15. Procédé selon au moins l'une des revendications 5 à 14,
**caractérisé en ce que**
la co-condensation du composant B s'effectue à une température de 60°C.

16. Procédé selon au moins l'une des revendications 5 à 15,
**caractérisé en ce que**
la durée de la co-condensation du composant B est située entre 30 et 120 minutes.

17. Procédé selon au moins l'une des revendications 5 à 16,
**caractérisé en ce que**
la durée de la co-condensation du composant B est de 60 minutes.

18. Procédé selon au moins l'une des revendications 5 à 17,
**caractérisé en ce que**
le rapport massique, sur base de la teneur en résine solide du composant A au composant B est situé entre 1:0,2 et 1:10.

19. Procédé selon au moins l'une des revendications 5 à 18,
**caractérisé en ce que**
le rapport massique, sur base de la teneur en résine solide du composant A au composant b est de 1:1.

20. Procédé selon au moins l'une des revendications 5 à 19,
**caractérisé en ce que**
comme acide catalysant on utilise des acides organiques, comme par exemple l'acide citrique, l'acide ascorbique, l'acide acétique ou des mélanges de ceux-ci.

21. Procédé selon au moins l'une des revendications 5 à 20,
**caractérisé en ce que**
comme acide catalysant on utilise des mélanges d'acides organiques inorganiques.

22. Procédé selon au moins l'une des revendications 5 à 21,
**caractérisé en ce que**
le catalyseur est actif dans une plage de pH de 2 à 7.

23. Procédé selon au moins l'une des revendications 5 à 22,
**caractérisé en ce que**
le catalyseur est actif dans une plage de pH de 3, 5 à 4.

24. Procédé selon au moins l'une des revendications 5 à 23,
**caractérisé en ce qu'**
on applique sur les particules solides 0,05 à 50 % en poids d'agent hydrophobe rapporté au poids du noyau, et on effectue ensuite l'encapsulage.

25. Utilisation du procédé selon les revendications 5 à 24, pour la fabrication de particules microencapsulées métalliques on oxymétalliques.

26. Utilisation du procédé selon les revendications 5 à 24, pour la microencapsulation de substances cristallines.
